# EUROPÄISCHE PATENTSCHRIFT

(11) **EP 3 714 992 B1**
(45) Veröffentlichungstag und Bekanntmachung des Hinweises auf die Patenterteilung: **28.08.2024**
(21) Anmeldenummer: 19166080.2
(22) Anmeldetag: 29.03.2019
(51) Int. Cl.: B05C 5/02, F16K 41/12

(54) **VORRICHTUNG ZUM AUSGEBEN EINES FLIESSFÄHIGEN MEDIUMS SOWIE VERFAHREN ZUM BETREIBEN EINER DERARTIGEN VORRICHTUNG**
DEVICE FOR DISPENSING A FLOWABLE MEDIUM AND METHOD FOR OPERATING SUCH A DEVICE
DISPOSITIF DE DISTRIBUTION D'UN FLUIDE COULANT AINSI QUE PROCÉDÉ DE FONCTIONNEMENT D'UN TEL DISPOSITIF

(43) Veröffentlichungstag der Anmeldung: 30.09.2020
(73) Patentinhaber: Robatech AG, 5630 Muri (CH)
(72) Erfinder: INEICHEN, Beatus, 6353 Weggis (CH)
(74) Vertreter: Franke, Markus

(56) Entgegenhaltungen:
- CN-Y- 2 725 676
- DE-A1- 3 630 910
- US-A- 3 128 632
- US-A- 5 941 505
- US-A1- 2015 059 882

## Beschreibung

Die vorliegende Erfindung betrifft eine Vorrichtung zum Ausgeben eines fließfähigen Mediums, wobei es sich bei dem fließfähigen Medium vorzugsweise um einen Klebstoff, insbesondere einen Heißkleber oder Schmelzklebstoff handelt. Ferner betrifft die vorliegende Erfindung ein Verfahren zum Betreiben einer derartigen Vorrichtung.

Vorrichtungen zum Ausgeben eines fließfähigen Mediums werden zum Beispiel dafür verwendet, portionsweise fließfähiges Medium auf ein Substrat aufzubringen. Die Auftragung des fließfähigen Mediums erfolgt dabei in der Regel gesteuert, wobei die Vorrichtung eine Ausgabeöffnung zum Ausgeben des fließfähigen Mediums aufweist, wobei diese Ausgabeöffnung mittels eines Dichtabschnitts einer mit einem Aktuator bewegbaren Stange geschlossen und geöffnet werden kann. Insofern weist eine derartige Vorrichtung ein verschließbares Ventil auf. Eine Vorrichtung zum Ausgeben eines fließfähigen Mediums kann auch als Druckregelventil, Überdruckventil oder als Drossel ausgebildet sein. Bei einer Ausbildung als Drossel bleibt während laufendem Betrieb die Ausgabeöffnung dauernd geöffnet. Die Ausführung als Druckregelventil oder Überdruckventil zur Begrenzung von einem Druck kann ein Sicherheitselement sein, wobei im Normalfall die Ausgabeöffnung geschlossen ist und sehr selten geöffnet, um die Funktion der Druckbegrenzung zu erzielen.

Hinsichtlich derartiger Vorrichtungen zum Ausgeben eines fließfähigen Mediums der vorgenannten Art besteht eine besondere Problematik darin, zu verhindern, dass das fließfähige Medium in den Bereich des Aktuators oder in den Bereich eines Lagerabschnitts der Vorrichtung für die Stange gelangt. Um den Aktuator und/oder den Lagerabschnitt gegenüber dem fließfähigen Medium, insbesondere gegenüber einer das fließfähige Medium aufnehmenden Kavität abzudichten, werden Dichtungen verwendet, wobei zu diesem Zweck grundsätzlich zwei unterschiedliche Arten von Dichtungen bekannt sind.

Zum einen eine sogenannte "dynamische Dichtung", wobei bei einer dynamischen Dichtung beim Betrieb der Vorrichtung die Dichtung bzw. das Dichtelement zwischen zwei sich relativ zueinander bewegenden Oberflächen ausgebildet bzw. angeordnet ist. Ein Nachteil bei dieser Art der Abdichtung ist, dass beim Langzeitbetrieb der Vorrichtung die dynamische Dichtung abgenutzt wird und infolge dessen die Dichtung ihre Dichtwirkung verliert, wodurch es zu ungewünschtem Eindringen von fließfähigem Medium in den Bereich des Aktuators und/oder des Lagerabschnitts kommen kann. Ein bekannter Nachteil von dynamischen Dichtungen ist neben dem unweigerlichen Verschleiß die fehlende Leckagefreiheit. Das bedeutet, bei jedem Doppelhub der Stange passiert permanent eine bestimmte Menge des fließfähigen Mediums den Dichtbereich. Dabei handelt es sich um sehr geringe Mengen, welche mit zunehmendem Verschleiß der Dichtung größer werden. Dynamische Dichtungen haben zudem die Eigenart, dass sich diese nach längerem Stillstand festsetzen können. Dabei kann das stehende fließfähige Medium um den Gleitbereich der Dichtung verkleben und ein Gleiten behindern oder unmöglich machen. Bei Verwendung einer derartigen Vorrichtung zum Ausgeben eines fließfähigen Mediums als Sicherheitselement, beispielsweise als Überdruckventil, kann dies zu einem Versagen des Ventils führen und somit wäre die Sicherheitsfunktion nicht gewährleistet.

Des Weiteren sind aus dem Stand der Technik sogenannte "statische Dichtungen", insbesondere in Form von Balgdichtungen, bekannt. Im Gegensatz zu einer dynamischen Dichtung erfolgt bei einer Balgdichtung die Abdichtung nicht zwischen zwei sich gegeneinander bewegenden Flächen, sondern die Balgdichtung ist mit einem ersten Abschnitt mit der Stange statisch verbunden und mit einem zweiten Abschnitt statisch mit einem weiteren Element der Vorrichtung verbunden, wobei sich die Stange relativ zu dem zweiten Element der Vorrichtung bewegt. Typischerweise handelt es sich bei dem zweiten Element um einen Teilbereich des Gehäuses. Bei einer statischen Dichtung wird die Bewegung der Stange gegenüber dem Element der Vorrichtung durch eine Verformung der Dichtung in der axialen Richtung, konkret eine Streckung oder Dehnung bzw. Stauchung, aufgenommen.

Eine Vorrichtung zum Ausgeben eines fließfähigen Mediums mit einer statischen Dichtung in Form einer Balgdichtung ist beispielsweise aus der DE 10 2015 000 630 B3 bekannt.

Eine Vorrichtung mit einer statischen Dichtung in Form einer Membran ist aus der WO 2009/019036 A1 bekannt, welche eine Nadelventilanordnung zur Steuerung fließfähiger Medien, insbesondere von Lackmaterialien in einer Beschichtungsanlage, betrifft. Die Nadelventilanordnung umfasst eine Nadeldichtung und eine fest mit der Ventilnadel verbundene und mit ihr bewegbar ausgebildete Dichtungsmembran. Die WO 2009/019036 A1 offenbart eine Vorrichtung zum Ausgeben eines fließfähigen Mediums, aufweisend:
- ein Gehäuse mit einem Innenraum,
- eine in dem Gehäuse gelagerte Stange, wobei die Stange mittels eines Aktuators zwischen einer ersten Endstellung und einer zweiten Endstellung in einer axialen Richtung und umgekehrt bewegbar ist,
- eine Membran, wobei die Stange die Membran durchsetzt, wobei die Membran radial außen abgedichtet in dem Gehäuse gelagert ist und radial innen abgedichtet in der Stange gelagert ist, wobei die Membran den Innenraum in eine erste Kavität und in eine zweite Kavität unterteilt, wobei die Membran die erste Kavität von der zweiten Kavität fluiddicht trennt, wobei die erste Kavität der Aufnahme des fließfähigen Mediums dient,
- zumindest einen in die erste Kavität mündenden Kanal, durch den das fließfähige Medium in die erste Kavität einströmen kann,
- eine in die Kavität mündende Ausgabeöffnung zum Ausgeben des fließfähigen Mediums, wobei die Stange einen Dichtabschnitt aufweist, wobei der Dichtabschnitt in der ersten Endstellung die Ausgabeöffnung verschließt und in der zweiten Endstellung beabstandet von der Ausgabeöffnung angeordnet ist.

Bei den vorgenannten Vorrichtungen tritt insbesondere bei hohen Drücken des fließfähigen Mediums in der ersten Kavität, beispielsweise bei Drücken im Bereich von 80 bar bis 120 bar, die Problematik auf, dass es beim Betreiben der Vorrichtung, insbesondere bei einem Langzeitbetrieb der Vorrichtung, aufgrund der hohen Druckbelastung der Membran durch das fließfähige Medium zu einer Beschädigung der Membran kommen kann.

Aus der US 5 941 505 A ist ein Ventil bekannt, das die Merkmale des Oberbegriffs des Patentanspruchs 1 aufweist. Eine Membran grenzt einen Unterstützungshohlraum gegenüber einem Durchflusskanal ab, wobei dieser Unterstützungshohlraum mit einem inkompressiblen, verformbaren Unterstützungsmedium gefüllt ist.

Die US 3 128 632 A, die US 2015/059882 A1, die DE 36 30 910 A1 und die CN 2 725 676 Y offenbaren weiteren Stand der Technik.

Aufgabe der vorliegenden Erfindung ist es, eine Vorrichtung, die die Merkmale des Oberbegriffs des Patentanspruchs 1 aufweist, derart weiterzubilden, dass diese auch bei hohen Drücken des fließfähigen Mediums einen zuverlässigen Langzeitbetrieb der Vorrichtung ermöglicht. Ferner ist es Aufgabe der Erfindung, ein Verfahren zum Betreiben einer derartigen Vorrichtung anzugeben.

Gelöst wird diese Aufgabe durch eine Vorrichtung, die die Merkmale des Patentanspruchs 1 aufweist, ferner durch ein Verfahren, das die Merkmale des geltenden Patentanspruchs 14 aufweist.

Zur Lösung der vorgenannten Aufgabe ist hinsichtlich der Vorrichtung vorgesehen, dass in der zweiten Kavität ein auf die Membran einwirkendes Druckmittel angeordnet ist.

Durch das Einwirken des Druckmittels auf die Membran erfolgt zumindest ein teilweiser Ausgleich der Druckbelastung der Membran, da bei einem Betreiben der Vorrichtung die Druckbelastung der Membran durch das in der ersten Kavität enthaltene fließfähige Medium durch das in der zweiten Kavität angeordnete

Druckmittel zumindest teilweise ausgeglichen wird, wodurch die Gefahr einer Beschädigung oder eines Reißens der Membran sowie ein Verschleiß der Membran verringert wird.

Ein weiterer Vorteil bei der Verwendung eines Druckmittels in der zweiten Kavität besteht darin, dass keine oder im Wesentlichen keine Volumenänderung der ersten Kavität bei Druckänderungen des in der ersten Kavität enthaltenen fließfähigen Mediums auftreten. Dadurch wird ein präziseres Schaltverhalten beim Öffnen und beim Schließen der Ausgabeöffnung erreicht. Zudem wird das Auftreten von Druckschwingungen, wie sie üblicherweise bei einer Dichtmembran, insbesondere bei hohen Schaltfrequenzen, auftreten, vermieden, was sich vorteilhaft auf das präzise Ausgeben des Mediums auswirkt. Unter Schaltfrequenz wird dabei der reziproke Zeitabstand zwischen zwei aufeinanderfolgenden ersten Endstellungen bzw. zweiten Endstellungen der Stange beim Betrieb der Vorrichtung verstanden.

Vorzugsweise ist die Membran derart gestaltet, dass sich das Volumen der zweiten Kavität mit dem Druckmittel bei einem Hub der Stange nicht verändert. Dies ist vor allem bei der Verwendung von nicht kompressiblen Medien als Druckmittel von Vorteil. Dadurch, dass sich das Volumen der zweiten Kavität mit dem Druckmittel bei einem Hub der Stange nicht verändert, ergibt sich der Vorteil, dass sich auch das Volumen der ersten Kavität mit dem fließfähigen Medium bei einem Hub der Stange nicht verändert. Eine Bewegung der Stange respektive ein Betätigen des Ventils erfolgt somit ohne störende Volumenänderung beider Kavitäten.

Des Weiteren ist aufgrund des Druckmittels die resultierende Kraft, welche aufgrund der mit der Membran verbundenen Stange auf die Stange einwirkt, verringert, wodurch ein präziser Schaltvorgang begünstigt wird. Die resultierende Kraft auf die Stange ist aufgrund des Druckmittels weitgehend unabhängig vom gewählten Druck des fließfähigen Mediums. Dies wirkt sich positiv auf das Schaltverhalten der Vorrichtung aus. Dadurch werden ein zeitlich präzises Schalten der Vorrichtung und dadurch beispielsweise ein präziser Auftrag vom fließfähigen Medium ermöglicht. Diese Präzision ist weitgehend unabhängig vom Druck.

Als besonders vorteilhaft wird es angesehen, wenn das Druckmittel durch ein Fluid, insbesondere eine Flüssigkeit oder ein Gel, gebildet ist oder das Druckmittel ein Fluid, insbesondere eine Flüssigkeit oder ein Gel, aufweist.

Bei der Flüssigkeit handelt es sich insbesondere um Silikonöl, Isopropylnaphthalin, Ruetasolv^{®} oder ein Fett.

Bei dem Fluid kann es sich aber auch um ein Gas handeln, wobei ein Gas vorzugsweise bei Drücken des fließfähigen Mediums von maximal 10 bar, insbesondere maximal 7 bar, Anwendung findet.

Vorzugsweise handelt es sich bei der Flüssigkeit um eine Flüssigkeit mit einer hohen Viskosität, beispielsweise im Bereich von 50 Pas bis 100 Pas. Dadurch wird eine genügend große Dämpfung erreicht, um das Schwingverhalten günstig zu beeinflussen.

Es ist auch denkbar, dass das Druckmittel durch ein Elastomer, insbesondere durch ein Elastomerformteil gebildet ist oder ein Elastomer oder ein Elastomerformteil aufweist. Das Elastomer bzw. das Elastomerformteil hat vorzugsweise eine Härte von 25 bis 40 Shore A.

Es ist auch durchaus denkbar, dass das Druckmittel durch ein Druckkissen gebildet ist, wobei das Druckkissen durchaus eines oder mehrere der vorgenannten Fluide und/oder das vorgenannte Elastomer enthalten kann.

Als besonders vorteilhaft wird es angesehen, wenn die zweite Kavität fluiddicht abgedichtet ist, insofern während des Betriebs der Vorrichtung kein Fluid in die zweite Kavität einströmen oder aus der zweiten Kavität ausströmen kann.

Es ist aber durchaus denkbar, dass die Vorrichtung eine in die zweite Kavität mündende Einlassöffnung aufweist, zwecks Zuführen oder Ausleiten von einem das Druckmittel bildenden Fluid. Durch Zuführen oder Ausleiten des Fluids kann der auf die Membran einwirkende Druck angepasst werden. Ferner kann durch Zuführen oder Ausleiten des Fluids die Lage der Membran innerhalb des Innenraums verändert und somit die mechanische Belastung der Membran beeinflusst werden.

Vorzugsweise ist die Membran bezüglich der Stange ortsfest mit der Stange verbunden.

In diesem Zusammenhang wird es als besonders vorteilhaft angesehen, wenn die Membran formschlüssig und/oder kraftschlüssig in der Stange gehalten ist.

Als besonders vorteilhaft wird es angesehen, wenn die Membran klemmend in der Stange gehalten ist. Dabei ist es durchaus denkbar, dass die Stange einen in der radialen Richtung ausgebildeten Vorsprung aufweist und die Membran zwischen diesem Vorsprung und einem mit der Stange verbindbaren Klemmelement klemmend gehalten ist.

Bei dem Klemmelement handelt es sich insbesondere um eine Hülse. Die Hülse kann durchaus derart ausgebildet sein, dass sie auf ein an der Stange ausgebildetes Gewinde aufschraubbar ist.

Um eine besonders stabile und fluiddichte Klemmung der Membran an der Stange zu erreichen, ist es durchaus denkbar, dass die Membran in dem Klemmbereich eine Wulst aufweist.

Vorzugsweise ist die Membran klemmend in dem Gehäuse gehalten.

Als besonders vorteilhaft wird es angesehen, wenn die Membran klemmend zwischen einem die erste Kavität begrenzenden Wandungsabschnitt des Gehäuses und einem die zweite Kavität begrenzenden Wandungsabschnitt des Gehäuses gehalten ist.

In einer vorteilhaften Weiterbildung ist vorgesehen, dass die Membran in dem Klemmbereich mit dem Gehäuse eine Wulst aufweist.

Es ist durchaus denkbar, dass die Vorrichtung einen Grundkörperabschnitt und einen in dem Grundkörperabschnitt gelagerten Kopfabschnitt aufweist, wobei der Kopfabschnitt die Ausgabeöffnung aufweist.

Der in die erste Kavität mündende Kanal ist vorzugsweise in dem Kopfabschnitt ausgebildet.

Vorzugsweise ist die Membran radial außen klemmend zwischen dem Grundkörperabschnitt und dem Kopfabschnitt gelagert.

In dem Bereich der Membran, welcher dem Trennen der ersten Kavität von der zweiten Kavität dient, weist die Membran eine Dicke von 0,5 mm bis 1,25 mm, insbesondere 0,7 mm bis 0,8 mm auf. Um eine definierte Verformung der Membran zu bewirken, wird es als vorteilhaft angesehen, wenn die Dicke der Membran in Abhängigkeit von dem radialen Abstand von der Stange variiert. Damit kann begünstigt werden, dass die Verformung der Membran so erfolgt, dass sich das Volumen der Kavitäten bei einem Hub der Stange nicht verändert.

In einer bevorzugten Weiterbildung der Vorrichtung ist vorgesehen, dass in der zweiten Kavität angrenzend an die Membran ein Sperrmedium angeordnet ist. Mittels dieses Sperrmediums kann verhindert werden, dass unerwünschte Stoffe durch die Membran von der zweiten Kavität in die erste Kavität diffundieren, insbesondere wenn die Membran für derartige Stoffe durchlässig ist. Bei den unerwünschten Stoffen kann es sich beispielsweise um Wasser oder Sauerstoff handeln.

Bei dem Sperrmedium kann es sich beispielsweise um Stickstoff, ein Edelgas, trockene Luft oder um ein flüssiges Medium, wie zum Beispiel einen Reiniger für Polyurethan-Klebstoffe (PUR-Reiniger) , ein Gel, einen Weichmacher oder ein Fett, insbesondere ein Fett auf Basis von Mineralöl und Betonit, handeln.

Vorzugsweise bedeckt das Sperrmedium einen an die Kavität angrenzenden Bereich der Membran vollständig.

Hinsichtlich des Sperrmediums ist es durchaus denkbar, dass das Sperrmedium das Druckmittel bildet.

Als besonders vorteilhaft wird es angesehen, wenn eine Mittelachse eines in die erste Kavität mündenden Abschnitts des zumindest einen Kanals die Membran schneidet. Ein damit einhergehendes Einströmen des fließfähigen Mediums in die erste Kavität hat sich hinsichtlich der mechanischen Belastung der Membran und insbesondere auch im Hinblick auf die Vermeidung von Toträumen in der ersten Kavität, also solchen Räumen der ersten Kavität, in dem kein Einströmen oder Abströmen oder im Wesentlichen kein Einströmen oder Abströmen des fließfähigen Mediums auftritt, als vorteilhaft erwiesen.

Vorzugsweise weist die Membran einen Thermoplast auf, insbesondere besteht die Membran aus einem Thermoplast.

Zudem weist ein Thermoplast typischerweise eine höhere Temperaturbeständigkeit auf, sodass eine Membran, die einen Thermoplast aufweist bzw. aus einem Thermoplast besteht, auch für fließfähige Medien mit einer höheren Temperatur, beispielsweise oberhalb von 120° C, insbesondere einer Temperatur oberhalb von 185° C, bevorzugt einer Temperatur oberhalb von 200°C, beständig ist, welches typische Verarbeitungstemperaturen von Schmelzklebstoffen sind. Der Bereich von 120°C bis 185°C ist der bevorzugte Temperaturbereich für Schmelzklebstoffe. Die Temperatur des fließfähigen Mediums kann im Bereich zwischen 0°C bis 220°C liegen. Bevorzugt liegt die Temperatur zwischen 20°C und 200°C und besonders bevorzugt zwischen 120°C und 185°C.

Bei dem Thermoplast handelt es sich insbesondere um MFA (Perfluormethylalkoxy), PFA (Perfluoralkoxy), FEP (Fluorethylenpropylen), PTFE (Polytetrafluorethylen), PEEK (Polyetheretherketon) oder PI (Polyimide).

Die Verwendung eines der vorgenannten Thermoplaste hat gegenüber einem Elastomer-Werkstoff den Vorteil, dass diese Thermoplaste im Gegensatz zu einem Elastomer-Werkstoff chemisch stabiler sind, insbesondere gegenüber aromatischen Kohlenwasserstoffen. Zudem hat sich gezeigt, dass mit einem der vorgenannten Thermoplaste im Gegensatz zu den üblichen Elastomer-Werkstoffen eine bessere, insbesondere dichtere kraftschlüssige und/oder formschlüssige Verbindung hergestellt werden kann. Neben den vorgenannten Thermoplasten sind aber auch andere Thermoplaste denkbar, welche eine ausreichend hohe chemische Beständigkeit gegen das verwendete fließfähige Medium aufweisen.

Als besonders vorteilhaft wird es angesehen, wenn ein Material der Membran, insbesondere der Thermoplast, formelastisch und volumeninelastisch ist.

Vorzugsweise ist die Membran biegsam.

Um die Schalteigenschaften der Vorrichtung zu verbessern, wird es als besonders vorteilhaft angesehen, wenn in der ersten Endstellung der Stange ein in dem Innenraum angeordneter, an das Gehäuse angrenzender Abschnitt der Membran und ein an die Stange angrenzender Abschnitt der Membran in derselben Ebene angeordnet sind, wobei die Ebene senkrecht zu der axialen Richtung ausgebildet ist.

Vorzugsweise ist die Membran rotationssymmetrisch ausgebildet.

Als besonders vorteilhaft wird es angesehen, wenn die Membran scheibenförmig oder im Wesentlichen scheibenförmig ausgebildet ist.

Vorzugsweise ist die Membran als Sickenmembran oder Rollenmembran ausgebildet.

Es ist vorgesehen, dass die Membran zumindest einen die Stange radial umlaufend umschließenden, in der axialen Richtung gewölbten Abschnitt, nämlich zwei entgegengesetzt gewölbte Abschnitte aufweist.

Die Gestaltung der Membran mit einem gewölbten Abschnitt bewirkt, dass die an der Membran auftretenden Kräfte beim Wechsel der Stange von der ersten Endstellung in die zweite Endstellung und umgekehrt besonders gut aufgenommen werden können, wodurch sich die mechanische Belastung der Membran reduziert und somit die Lebensdauer der Membran erhöht wird.

Als besonders vorteilhaft wird es angesehen, wenn der radial äußerste gewölbte Abschnitt in Richtung der zweiten Kavität gewölbt ist. Eine derartige Gestaltung der Membran ist insbesondere dann von Vorteil, wenn das fließfähige Medium radial außen in die erste Kavität einströmt, da diese Gestaltung der Membran die Bildung von Toträumen, also Bereichen in denen kein oder kaum Austausch des fließfähigen Mediums auftritt, vermeidet.

Vorzugsweise beträgt der axiale Abstand zwischen der ersten Endstellung und der zweiten Endstellung zwischen 0,05 mm und 1 mm.

Das erfindungsgemäße Verfahren zum Betreiben der erfindungsgemäßen Vorrichtung sieht vor, dass in der ersten Kavität das fließfähige Medium angeordnet ist, wobei das fließfähige Medium mit einem ersten Druck auf die Membran einwirkt, wobei das in der zweiten Kavität angeordnete Druckmittel mit einem dem ersten Druck entgegengesetzten zweiten Druck auf die Membran einwirkt, wobei der Betrag des zweiten Drucks 90 % bis 110 % des ersten Drucks beträgt. Das Verfahren begünstigt, dass die auf die Membran einwirkende, resultierende Kraft gegenüber einer Membran ohne entgegengesetzt einwirkendem Druckmittel verringert ist, was sich vorteilhaft auf die Lebensdauer der Vorrichtung und die Betriebssicherheit der Vorrichtung auswirkt.

Hinsichtlich des Verfahrens wird es als besonders vorteilhaft angesehen, wenn der erste Druck maximal 100 bar, vorzugsweise 20 bar bis 100 bar, insbesondere 50 bar bis 100 bar, bevorzugt 60 bar bis 90 bar, besonders bevorzugt 70 bar bis 80 bar beträgt.

Vorzugsweise beträgt die Temperatur des fließfähigen Mediums 180°C bis 220°C.

Bei dem fließfähigen Medium handelt es sich insbesondere um einen Schmelzklebstoff.

Die Vorrichtung wird vorzugsweise mit einer Schaltfrequenz von 0 bis 150Hz betrieben.

### Figurenbeschreibung

In der nachfolgenden Figur ist die Erfindung anhand eines Ausführungsbeispiels dargestellt, ohne hierauf beschränkt zu sein.

Es zeigt:

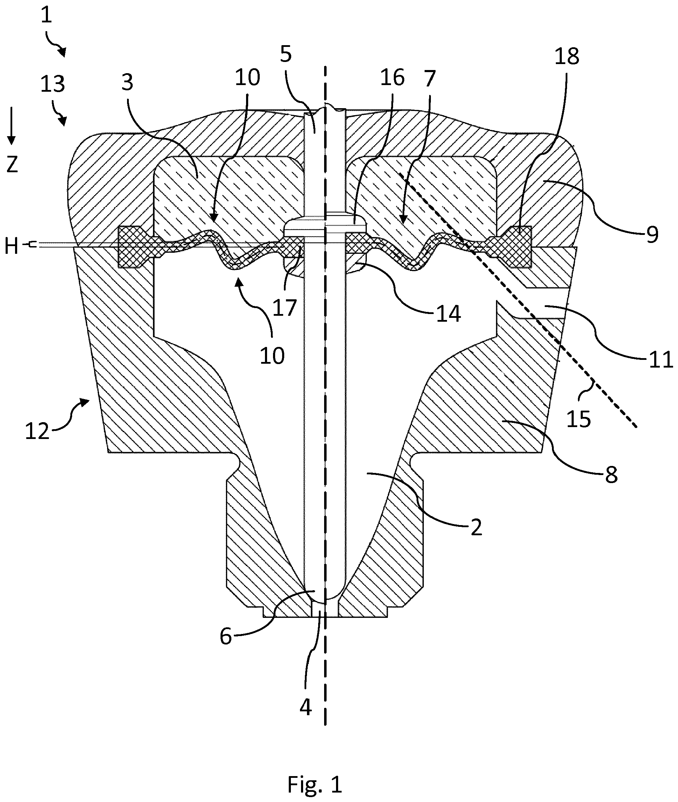

- Fig. 1: einen Teilbereich einer Vorrichtung zum Ausgeben eines fließfähigen Mediums, in einer Schnittansicht, parallel zu einer axialen Richtung.

Die Fig. 1 zeigt eine erfindungsgemäße Vorrichtung 1 zum Ausgeben eines fließfähigen Mediums, vorliegend zum Ausgeben eines Schmelzklebstoffs. Die Vorrichtung 1 weist einen Kopfabschnitt 12 und einen Grundkörperabschnitt 13 auf.

Dabei ist der Kopfabschnitt 12 in den Grundkörperabschnitt 13 eingesetzt und mit dem Grundkörperabschnitt 13 verbunden, vorzugsweise mit diesem stirnseitig verschraubt.

Der Kopfabschnitt 12 und der Grundkörperabschnitt 13 bilden Elemente eines Gehäuses der Vorrichtung 1, wobei dieses Gehäuse einen Innenraum mit zwei Kavitäten 2, 3 aufweist.

Die Vorrichtung 1 weist eine biegsame Membran 7 auf, wobei eine im dem Gehäuse gelagerte Stange 5 die Membran 7 durchsetzt und wobei die Membran 7 radial außen abgedichtet in dem Gehäuse gelagert ist, vorliegend zwischen dem Kopfabschnitt 12 und dem Grundkörperabschnitt 13 klemmend gehalten ist, und radial innen abgedichtet in der Stange 5 gelagert ist, vorliegend klemmend in der Stange 5 gehalten ist. Die Membran 7 ist bezüglich der Stange 5 ortsfest mit der Stange 5 verbunden, wobei die Membran 7 vorliegend zwischen einem radialen Vorsprung 16 der Stange 5 und einer mit der Stange 5 verbundenen Hülse 14 klemmend gehalten ist. Im Bereich dieser Klemmung weist die Membran 7 eine Wulst 17 auf. Auch in ihrem radial äußeren Bereich, der zwischen dem Kopfabschnitt 12 und dem Grundkörperabschnitt 13 klemmend gelagert ist, weist die Membran 7 eine Wulst 18 auf.

Die Membran 7 ist derart in dem Innenraum angeordnet, dass sie diesen in eine bezüglich einer durch Stange 5 verlaufenden Achse rotationssymmetrische erste Kavität 2 und in eine bezüglich der durch Stange 5 verlaufenden Achse rotationssymmetrische zweite Kavität 3 unterteilt, wobei die Membran 7 die erste Kavität 2 von der zweiten Kavität 3 fluiddicht trennt.

Die erste Kavität 2 dient der Aufnahme des fließfähigen Mediums, wobei die Vorrichtung 1, vorliegend der Kopfabschnitt 12, einen in die erste Kavität 2 mündenden Kanal 11 aufweist, durch den das fließfähige Medium in die erste Kavität 2 einströmen kann.

Der Kanal 11 ist gewinkelt gestaltet, wobei eine Mittelachse 15 eines in die erste Kavität 2 mündenden Abschnitts des Kanals 11 die Membran 7 schneidet. Somit strömt das einströmende fließfähige Medium in Richtung der zweiten Kavität 3 in die erste Kavität 2 ein.

Der Kopfabschnitt 12 der Vorrichtung 1 weist ferner eine in die erste Kavität 2 mündende Ausgabeöffnung 4 zum Ausgeben des fließfähigen Mediums auf.

Zwecks Verschließens der Ausgabeöffnung 4 weist die Stange 5 einen Dichtabschnitt 6 auf. Die Stange 5 ist mittels eines nicht dargestellten Aktuators zwischen einer ersten Endstellung und einer zweiten Endstellung in einer axialen Richtung Z und umgekehrt bewegbar, wobei der Dichtabschnitt 6 in der ersten Endstellung die Ausgabeöffnung 4 verschließt und in der zweiten Endstellung beabstandet von der Ausgabeöffnung 4 angeordnet ist. Die Fig. 1 zeigt in der linken Hälfte die erste Endstellung und in der rechten Hälfte die zweite Endstellung.

Der Hubweg H, das heißt der axiale Abstand zwischen der ersten Endstellung und der zweiten Endstellung der Stange 5 liegt im Bereich von 0,05 mm bis 1 mm.

Bei dem Aktuator kann es sich beispielsweise um einen Pneumatikzylinder, einen elektromechanischen Antrieb oder einen elektropneumatischen Antrieb handeln.

In der zweiten Kavität 3 ist ein auf die Membran 7 einwirkendes Druckmittel angeordnet, wobei es sich vorliegend bei dem Druckmittel um eine Flüssigkeit handelt.

Vorliegend ist die zweite Kavität 3 derart gestaltet, dass beim Betrieb der Vorrichtung 1 die zweite Kavität 3 fluiddicht abgedichtet ist, somit kein Ausströmen oder Einströmen des als Druckmittel fungierenden Fluids möglich ist.

Die Membran 7 ist klemmend zwischen einem die erste Kavität 2 begrenzenden Wandungsabschnitt 8 des Gehäuses und einem die zweite Kavität 3 begrenzenden Wandungsabschnitt 9 des Gehäuses gehalten, wobei der Wandungsabschnitt 8 Bestandteil des Kopfabschnitts 12 und der Wandungsabschnitt 9 Bestandteil des Grundkörperabschnitts 13 ist.

In der ersten Endstellung der Stange 5 ist ein in dem Innenraum angeordneter, an das Gehäuse angrenzender Abschnitt der Membran 7 und ein an die Stange 5 angrenzender Abschnitt der Membran 7 in derselben Ebene angeordnet, wobei die Ebene senkrecht zu der axialen Richtung Z ausgebildet ist. Dies lässt sich insbesondere der linken Hälfte der Fig. 1 entnehmen.

Die Membran 7 weist genau zwei die Stange 5 radial umlaufend umschließende, in der axialen Richtung Z gewölbte Abschnitte 10 auf, wobei die beiden Abschnitte 10 entgegengesetzt gewölbt sind. Dabei ist der radial äußerste gewölbte Abschnitt 10 in Richtung der zweiten Kavität 3 gewölbt. In der in der Fig. 1 dargestellten Schnittdarstellung ergibt sich somit ein wellenförmiger Querschnitt der Membran 7.

Mit der Vorrichtung 1 ist es möglich, fließfähige Medien, die unter einem hohen Druck stehen, beispielsweise einem Druck von 80 bar bis 100 bar, und Temperaturen im Bereich von 120°C bis 185°C, wie sie typischerweise bei der Verarbeitung von Schmelzklebstoffen auftreten, zu verarbeiten und dennoch eine hohe Schaltfrequenz, ein präzises Schaltverhalten zu erreichen bei dennoch hoher Lebensdauer der Membran 7.

Die Vorrichtung 1 kann neben der Anwendung zum Ausgeben eines Schmelzklebstoffs durch geringe bauliche Abwandlungen auch zu Regelzwecken verwendet werden. Die Vorrichtung 1 kann durch geringe bauliche Abwandlungen beispielsweise als Druckregelventil oder als Drossel verwendet werden.

Bei einer Verwendung als Drossel oder als Druckregelventil bleibt während laufendem Betrieb die Ausgabeöffnung 4 dauernd geöffnet, insofern befindet sich die Stange 5 außerhalb der ersten Endstellung. Der axiale Abstand zur ersten Endstellung wird dabei entweder laufend geregelt um einen Druck zu begrenzen oder zu regeln oder der Abstand bleibt konstant für eine Drosselfunktion.

Die Vorrichtung 1 kann auch zur Begrenzung von einem Druck dienen und insofern ein Sicherheitselement sein, das im Normalfall geschlossen ist, sich somit die Stange 5 in der ersten Endstellung befindet, und sehr selten die Funktion der Druckbegrenzung ausübt, indem die Stange 5 in eine Stellung übergeht, die nicht der ersten Endstellung entspricht.

### Bezugszeichenliste

- 1: Vorrichtung
- 2: Erste Kavität
- 3: Zweite Kavität
- 4: Ausgabeöffnung
- 5: Stange
- 6: Dichtabschnitt
- 7: Membran
- 8: Wandungsabschnitt
- 9: Wandungsabschnitt
- 10: Abschnitt
- 11: Kanal
- 12: Kopfabschnitt
- 13: Grundkörperabschnitt
- 14: Hülse
- 15: Mittelachse
- 16: Vorsprung
- 17: Wulst
- 18: Wulst

- Z: axiale Richtung
- H: Hubweg

## Patentansprüche

1. Vorrichtung (1) zum Ausgeben eines fließfähigen Mediums, insbesondere zum Ausgeben eines Klebstoffs, vorzugsweise zum Ausgeben eines Schmelzklebstoffs, aufweisend:
- ein Gehäuse mit einem Innenraum,
- eine in dem Gehäuse gelagerte Stange (5), wobei die Stange (5) mittels eines Aktuators zwischen einer ersten Endstellung und einer zweiten Endstellung in einer axialen Richtung (Z) und umgekehrt bewegbar ist,
- eine Membran (7), wobei die Stange (5) die Membran durchsetzt, wobei die Membran (7) radial außen abgedichtet in dem Gehäuse gelagert ist und radial innen abgedichtet in der Stange (5) gelagert ist, wobei die Membran (7) den Innenraum in eine erste Kavität (2) und in eine zweite Kavität (3) unterteilt, wobei die Membran (7) die erste Kavität (2) von der zweiten Kavität (3) fluiddicht trennt, wobei die erste Kavität (2) der Aufnahme des fließfähigen Mediums dient,
- zumindest einen in die erste Kavität (2) mündenden Kanal (11), durch den das fließfähige Medium in die erste Kavität (2) einströmen kann,
- eine in die erste Kavität (2) mündende Ausgabeöffnung (4) zum Ausgeben des fließfähigen Mediums, wobei die Stange (5) einen Dichtabschnitt (6) aufweist, wobei der Dichtabschnitt (6) in der ersten Endstellung die Ausgabeöffnung (4) verschließt und in der zweiten Endstellung beabstandet von der Ausgabeöffnung (4) angeordnet ist,
wobei in der zweiten Kavität (3) ein auf die Membran (7) einwirkendes Druckmittel angeordnet ist, **dadurch gekennzeichnet, dass** der axiale Abstand zwischen der ersten Endstellung und der zweiten Endstellung von 0,05 mm bis 1 mm beträgt und wobei in dem Bereich der Membran (7), welcher dem Trennen der ersten Kavität (2) von der zweiten Kavität (3) dient, die Membran (7) eine Dicke von 0,5 mm bis 1,25 mm aufweist, wobei die Membran (7) zwei die Stange (5) radial umlaufend umschließende, in der axialen Richtung (Z) gewölbte Abschnitte (10) aufweist, wobei die zwei gewölbten Abschnitte (10) entgegengesetzt gewölbt sind.

2. Vorrichtung (1) nach Anspruch 1, wobei das Druckmittel durch ein Fluid, insbesondere eine Flüssigkeit, oder durch ein Elastomer gebildet ist.

3. Vorrichtung (1) nach Anspruch 1 oder 2, wobei die zweite Kavität (3) fluiddicht abgedichtet ist.

4. Vorrichtung (1) nach einem der Ansprüche 1 bis 3, wobei die Membran (7) bezüglich der Stange (5) ortsfest mit der Stange (5) verbunden ist.

5. Vorrichtung (1) nach Anspruch 4, wobei die Membran (7) klemmend in der Stange (5) gehalten ist.

6. Vorrichtung (1) nach einem der Ansprüche 1 bis 5, wobei der Membran (7) klemmend zwischen einem die erste Kavität (2) begrenzenden Wandungsabschnitt (8) des Gehäuses und einem die zweite Kavität (3) begrenzenden Wandungsabschnitt (9) des Gehäuses gehalten ist.

7. Vorrichtung (1) nach einem der Ansprüche 1 bis 6, wobei in der zweiten Kavität (3) angrenzend an die Membran (7) ein Sperrmedium angeordnet ist.

8. Vorrichtung nach einem der Ansprüche 1 bis 7, wobei eine Mittelachse (15) eines in die erste Kavität (2) mündenden Abschnitts des zumindest einen Kanals (11) die Membran (7) schneidet.

9. Vorrichtung (1) nach einem der Ansprüche 1 bis 8, wobei die Membran (7) einen Thermoplast aufweist, insbesondere aus einem Thermoplast besteht.

10. Vorrichtung (1) nach Anspruch 1 bis 9, wobei ein Material der Membran (7), insbesondere der Thermoplast, formelastisch und volumeninelastisch ist.

11. Vorrichtung (1) nach einem der Ansprüche 1 bis 10, wobei in der ersten Endstellung der Stange (5) ein in dem Innenraum angeordneter, an das Gehäuse angrenzender Abschnitt der Membran (7) und ein an die Stange (5) angrenzender Abschnitt der Membran (7) in derselben Ebene angeordnet sind, wobei die Ebene senkrecht zu der axialen Richtung (Z) ausgebildet ist.

12. Vorrichtung (1) nach einem der Ansprüche 1 bis 11, wobei die Membran (7) als Sickenmembran ausgebildet ist.

13. Vorrichtung (1) nach einem der Ansprüche 1 bis 11, wobei die Membran (7) als Rollenmembran ausgebildet ist.

14. Verfahren zum Betreiben der Vorrichtung (1) nach einem der Ansprüche 1 bis 13, wobei in der ersten Kavität (2) das fließfähige Medium angeordnet ist, wobei das fließfähige Medium mit einem ersten Druck auf die Membran (7) einwirkt, wobei das in der zweiten Kavität (3) angeordnete Druckmittel mit einem dem ersten Druck entgegengesetzten zweiten Druck auf die Membran (7) einwirkt, wobei der Betrag des zweiten Drucks 90% bis 110% des ersten Drucks beträgt.

15. Verfahren nach Anspruch 14, wobei der erste Druck 20 bar bis 100 bar, insbesondere 50 bar bis 100 bar, bevorzugt 60 bar bis 90 bar, besonders bevorzugt 70 bar bis 80 bar beträgt.

## Claims

1. Device (1) for dispensing a flowable medium, in particular for dispensing an adhesive, preferably for dispensing a hot melt adhesive, having:
- a housing with an interior space,
- a rod (5) mounted in the housing, wherein the rod (5) can be moved by means of an actuator between a first end position and a second end position in an axial direction (Z) and vice versa,
- a diaphragm (7), wherein the rod (5) passes through the diaphragm, wherein the diaphragm (7) is mounted in a sealed manner in the housing radially on the outside and is mounted in a sealed manner in the rod (5) radially on the inside, wherein the diaphragm (7) divides the interior space into a first cavity (2) and into a second cavity (3), wherein the diaphragm (7) separates the first cavity (2) from the second cavity (3) in a fluid-tight manner, wherein the first cavity (2) serves to hold the flowable medium,
- at least one channel (11), which opens into the first cavity (2) and through which the flowable medium can flow into the first cavity (2),
- a dispensing opening (4), which opens into the first cavity (2), for dispensing the flowable medium, wherein the rod (5) has a sealing section (6), wherein the sealing section (6) closes the dispensing opening (4) in the first end position and is arranged at a distance from the dispensing opening (4) in the second end position,
wherein a pressure medium acting on the diaphragm (7) is arranged in the second cavity (3), **characterized in that** the axial distance between the first end position and the second end position is from 0.05 mm to 1 mm, and wherein, in the region of the diaphragm (7) that serves to separate the first cavity (2) from the second cavity (3), the diaphragm (7) has a thickness from 0.5 mm to 1.25 mm, wherein the diaphragm (7) has two sections (10) that surround the rod (5) in a radially encircling manner and are arched in the axial direction (Z), wherein the two arched sections (10) are arched in opposite directions.

2. Device (1) according to Claim 1, wherein the pressure medium is formed by a fluid, in particular a liquid, or by an elastomer.

3. Device (1) according to Claim 1 or 2, wherein the second cavity (3) is sealed off in a fluid-tight manner.

4. Device (1) according to one of Claims 1 to 3, wherein the diaphragm (7) is connected to the rod (5) in a manner fixed relative to the rod (5).

5. Device (1) according to Claim 4, wherein the diaphragm (7) is held in the rod (5) with a clamping action.

6. Device (1) according to one of Claims 1 to 5, wherein the diaphragm (7) is held with a clamping action between a housing wall section (8) delimiting the first cavity (2) and a housing wall section (9) delimiting the second cavity (3).

7. Device (1) according to one of Claims 1 to 6, wherein a barrier medium is arranged adjoining the diaphragm (7) in the second cavity (3).

8. Device according to one of Claims 1 to 7, wherein a centre line (15) of a section of the at least one channel (11) that opens into the first cavity (2) intersects the diaphragm (7).

9. Device (1) according to one of Claims 1 to 8, wherein the diaphragm (7) comprises a thermoplastic, in particular consists of a thermoplastic.

10. Device (1) according to Claims 1 to 9, wherein a material of the diaphragm (7), in particular the thermoplastic, is flexible in shape and inflexible in volume.

11. Device (1) according to one of Claims 1 to 10, wherein, in the first end position of the rod (5), a section of the diaphragm (7) that is arranged in the interior space and adjoins the housing and a section of the diaphragm (7) that adjoins the rod (5) are arranged in the same plane, wherein the plane is formed perpendicularly to the axial direction (Z).

12. Device (1) according to one of Claims 1 to 11, wherein the diaphragm (7) is designed as a beaded diaphragm.

13. Device (1) according to one of Claims 1 to 11, wherein the diaphragm (7) is designed as a rolling diaphragm.

14. Method for operating the device (1) according to one of Claims 1 to 13, wherein the flowable medium is arranged in the first cavity (2), wherein the flowable medium acts on the diaphragm (7) with a first pressure, wherein the pressure medium arranged in the second cavity (3) acts on the diaphragm (7) with a second pressure opposed to the first pressure, wherein the magnitude of the second pressure is 90% to 110% of the first pressure.

15. Method according to Claim 14, wherein the first pressure is 20 bar to 100 bar, in particular 50 bar to 100 bar, preferably 60 bar to 90 bar, particularly preferably 70 bar to 80 bar.

## Revendications

1. Dispositif (1) permettant de distribuer un fluide coulant, en particulier de distribuer un adhésif, de préférence de distribuer un adhésif thermofusible, présentant :
- un boîtier pourvu d'un espace intérieur,
- une barre (5) montée dans le boîtier, la barre (5) pouvant être déplacée au moyen d'un actionneur entre une première position d'extrémité et une deuxième position d'extrémité dans une direction axiale (Z) et inversement,
- une membrane (7), dans lequel la barre (5) traverse la membrane, la membrane (7) étant montée dans le boîtier de manière étanche radialement à l'extérieur et montée dans la barre (5) de manière étanche radialement à l'intérieur, dans lequel la membrane (7) divise l'espace intérieur en une première cavité (2) et en une deuxième cavité (3), la membrane (7) séparant de manière étanche au fluide la première cavité (2) par rapport à la deuxième cavité (3), la première cavité (2) servant à recevoir le fluide coulant,
- au moins un canal (11) débouchant dans la première cavité (2) et à travers lequel le fluide coulant peut entrer dans la première cavité (2),
- une ouverture de distribution (4) débouchant dans la première cavité (2) pour distribuer le milieu coulant, dans lequel la barre (5) présente une partie d'étanchéité (6), la partie d'étanchéité (6) fermant dans la première position d'extrémité l'ouverture de distribution (4) et étant disposée dans la deuxième position d'extrémité à distance de l'ouverture de distribution (4),
dans lequel un moyen de pression agissant sur la membrane (7) est disposé dans la deuxième cavité (3),
**caractérisé en ce que** la distance axiale entre la première position d'extrémité et la deuxième position d'extrémité mesure de 0,05 mm à 1 mm, et dans lequel dans la zone de la membrane (7) qui sert à séparer la première cavité (2) de la deuxième cavité (3), la membrane (7) présente une épaisseur de 0,5 mm à 1,25 mm, dans lequel la membrane (7) présente deux parties (10) entourant la barre (5) de manière radialement périphérique, courbes dans la direction axiale (Z), dans lequel les deux parties courbes (10) sont courbées de manière opposée.

2. Dispositif (1) selon la revendication 1, dans lequel le moyen de pression est formé par un fluide, en particulier un liquide, ou par un élastomère.

3. Dispositif (1) selon la revendication 1 ou 2, dans lequel la deuxième cavité (3) est rendue étanche au fluide.

4. Dispositif (1) selon l'une quelconque des revendications 1 à 3, dans lequel la membrane (7) est reliée à la barre (5) de manière stationnaire par rapport à la barre (5).

5. Dispositif (1) selon la revendication 4, dans lequel la membrane (7) est maintenue dans la barre (5) par serrage.

6. Dispositif (1) selon l'une quelconque des revendications 1 à 5, dans lequel la membrane (7) est maintenue par serrage entre une partie de paroi (8) du boîtier, délimitant la première cavité (2), et une partie de paroi (9) du boîtier, délimitant la deuxième cavité (3) .

7. Dispositif (1) selon l'une quelconque des revendications 1 à 6, dans lequel un milieu de blocage est disposé dans la deuxième cavité (3) de manière adjacente à la membrane (7).

8. Dispositif selon l'une quelconque des revendications 1 à 7, dans lequel un axe central (15) d'une partie débouchant dans la première cavité (2) dudit au moins un canal (11) intersecte la membrane (7).

9. Dispositif (1) selon l'une quelconque des revendications 1 à 8, dans lequel la membrane (7) présente une matière thermoplastique, étant en particulier composée d'une matière thermoplastique.

10. Dispositif (1) selon la revendication 1 à 9, dans lequel une matière de la membrane (7), en particulier la matière thermoplastique, est élastique en forme et élastique en volume.

11. Dispositif (1) selon l'une quelconque des revendications 1 à 10, dans lequel dans la première position d'extrémité de la barre (5), une partie de la membrane (7), disposée dans l'espace intérieur et adjacente au boîtier, et une partie de la membrane (7), adjacente à la barre (5), sont disposées dans le même plan, le plan étant réalisé perpendiculairement à la direction axiale (Z).

12. Dispositif (1) selon l'une quelconque des revendications 1 à 11, dans lequel la membrane (7) est réalisée sous forme de membrane à convolution.

13. Dispositif (1) selon l'une quelconque des revendications 1 à 11, dans lequel la membrane (7) est réalisée sous forme de membrane à rouleau.

14. Procédé permettant de faire fonctionner le dispositif (1) selon l'une quelconque des revendications 1 à 13, dans lequel le milieu coulant est disposé dans la première cavité (2), le milieu coulant agissant sur la membrane (7) avec une première pression, le moyen de pression disposé dans la deuxième cavité (3) agissant sur la membrane (7) avec une deuxième pression opposée à la première pression, dans lequel le montant de la deuxième pression est de 90 % à 110 % de la première pression.

15. Procédé selon la revendication 14, dans lequel la première pression est de 20 bar à 100 bar, en particulier de 50 bar à 100 bar, de préférence de 60 bar à 90 bar, de manière particulièrement préférée de 70 bar à 80 bar.
